# EUROPEAN PATENT SPECIFICATION

(11) **EP 2 173 617 B1**
(45) Date of publication and mention of the grant of the patent: **02.05.2012**
(21) Application number: 08826414.8
(22) Date of filing: 27.06.2008
(51) Int. Cl.: B64F 1/36

(54) **SYSTEM FOR MOVING AND STORING A CONDUIT FOR SUPPLYING AIR TO AN AIRCRAFT**
SYSTEM ZUM TRANSPORT UND ZUR LAGERUNG EINER LEITUNG ZUR LUFTZUFUHR IN EINEM FLUGZEUG
SYSTÈME POUR DÉPLACER ET RANGER UN CONDUIT POUR ALIMENTER EN AIR UN AÉRONEF

(30) Priority: 19.07.2007 US 961174 P; 19.07.2007 US 961178 P; 17.06.2008 US 140788
(43) Date of publication of application: 14.04.2010
(73) Proprietor: Hobart Brothers Company, Troy, Ohio 45373 (US)
(72) Inventor: GOSIS, Anatoly, Glenview, Illinois 60026 (US); KOIZUMI, Scott Takayuki, Glenview, Illinois 60026 (US); KOCH, Folkert Fred, Glenview, Illinois 60026 (US); PIETY, Brian Michael, Glenview, Illinois 60026 (US); BEDNARZ, Dennis, Glenview, Illinois 60026 (US)
(74) Representative: Finnie, Peter John
(86) International application number: PCT/US2008/068477
(87) International publication number: WO 2009/012035

(56) References cited:
- JP-A- 11 159 849
- US-A1- 2004 209 565

## Description

### BACKGROUND OF THE INVENTION

The present invention relates generally to a system and method for connecting a source of preconditioned air to a receiver for the preconditioned air, typically an aircraft. More particularly, the present invention relates to a system for storing and moving a hose leading from the source of preconditioned air to an aircraft. The system reduces the potential for damaging the hose due to sliding friction against components of the system and facilitates efficient storage and dispensing of the hose.

When an aircraft is at rest on the ground, the aircraft is often connected to a source of preconditioned air. That is, rather than tax the onboard heating or air-conditioning systems of the aircraft, a connection is made to a ground source that provides heated or air-conditioned air to the aircraft. To facilitate such a connection, a hose is extended from the preconditioned air source to a standardized hatch door located, generally, on the underside of the aircraft. To create a secure connection between the hose and the aircraft, a standard air chute is typically used that mates and locks with the area about the hatch door through a clamping or similar fixed connection system.

After departure of the aircraft, it is preferable to move the hose to a position where the hose is less likely to be damaged, for example, by airport vehicles or direct exposure to precipitation and other elements. Some hoses are provided in multiple detachable segments and, as such, an operator may disassemble the segments for storage. Other hoses are flexible and, as such, an operator may fold, roll, or compress the hose into a more compact position for storage. However, such tasks can be time consuming for operators and, thus, may not be consistently performed.

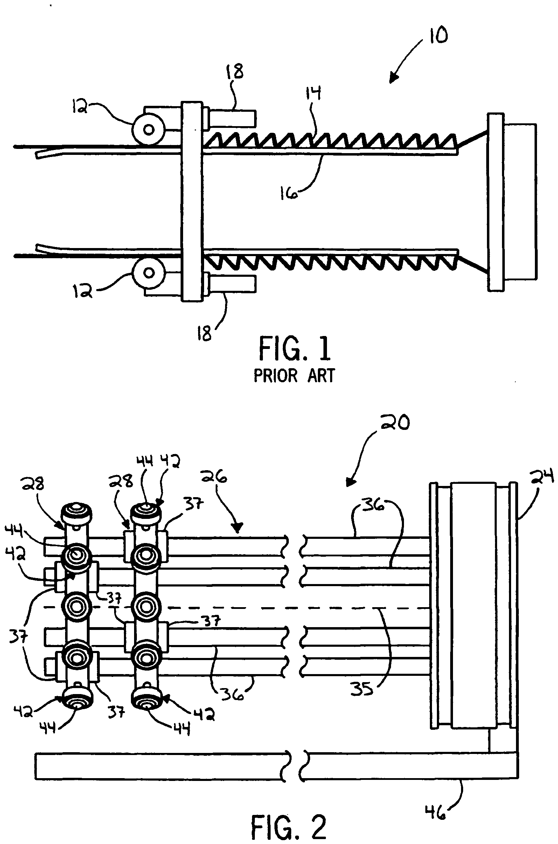

Some systems have been developed that attempt to alleviate this problem. For flexible hoses in particular, systems have been developed that retract the hose into a storage position without operator assistance. An example of such a system is shown in Fig. 1. The prior art storage system 10 includes drive mechanisms 12 that move a flexible hose 14 between a use position and a storage position. The hose 14 is axially compressed and supported by a rigid tube 16 in the storage position. To dispense the hose 14 the drive mechanisms 12 may drive in the opposite direction to push the hose 14 from the tube 16. The prior art system 10 optionally includes actuators 18 that release the drive mechanisms 12 from engagement with the hose 14 to permit the hose 14 to be manually pulled from the storage position. An example of such a system is known from US2004/0209565.

However, the drive mechanisms of systems such as those shown in Fig. 1 typically result in high friction between the inner surface of the hose 14 and the tube 16. The high friction can cause wear on the hose 14 that may render the hose 14 ineffective for supplying preconditioned air. In addition, providing additional components within the hose, such as the tube, increases the weight of the system and the resistance to airflow resulting in reduced airflow efficiency. Therefore, increased power input may be necessary to deliver preconditioned air to the aircraft. Further still, systems such as those shown in Fig. 1 typically dispense and retract the hose slowly.

Therefore, it would be desirable to have a system for storing and moving a hose without reducing the product life of the hose and that permits preconditioned air to be delivered efficiently.
JP 11159849 describes an air duct storage unit with a supporting tube, an air duct holding body for folding and mounting a flexible air duct at a required interval in a longitudinal direction on the outside of the supporting tube, and a flange section of drawing out the air duct by holding a sufficient tensile force with respect to an extending direction of a folded air duct while gradually expanding and opening a folded air duct. A bracket encircles an air duct holding body so as to fix a supporting tube externally on an outer circumference of the other thereof with respect to one end of the supporting tube.

### BRIEF SUMMARY OF THE INVENTION

The present invention overcomes the aforementioned drawbacks by providing a light-weight system for moving a preconditioned air hose. The system is designed to move the hose without reducing the product life of the hose and permit preconditioned air to be delivered efficiently.

In accordance with one aspect of the invention, a system for supporting a hose configured to deliver preconditioned air from a source to an aircraft is provided, as described in appended claim 1.

In an embodiment, a system for supporting a hose configured to deliver preconditioned air from a source to an aircraft is described. The system includes a base support and a plurality of longitudinal members connected to the base support proximate a first end of the plurality of longitudinal members. The plurality of longitudinal members are configured to engage an inner surface of the hose to support the hose. The system also includes a frame assembly connected to the plurality of longitudinal members proximate a second end of the plurality of longitudinal members. The frame assembly includes a plurality of supports extending away from the frame assembly that are configured to engage the inner surface of the hose.

In a possible implementation, a kit for retrofitting a system for supporting a hose for delivering preconditioned air to an aircraft is provided. The kit includes a base support and a stationary bearing assembly configured to connect to the base support and extend from base support in a travel direction of the hose. The stationary bearing assembly is configured to engage the hose to support the hose. The kit also includes a frame assembly configured to connect to the stationary bearing assembly at a position spaced apart from the base support in the travel direction of the hose. The frame assembly includes a support extending away from the frame assembly that is configured to engage the hose.

Various other features of the present invention will be made apparent from the following detailed description and the drawings.

### BRIEF DESCRIPTION OF THE SEVERAL VIEWS OF THE DRAWINGS

The invention will hereafter be described with reference to the accompanying drawings, wherein like reference numerals denote like elements, and:

Fig. 1 is a cross-sectional view of a prior art system for moving a flexible hose for providing preconditioned air to an aircraft;

Fig. 2 is a side-elevational view of a system for moving a preconditioned air hose in accordance with the present invention;

Fig. 3 is a side-elevational view of the system of Fig. 2 with a preconditioned air hose in a storage position;

Fig. 4 is a side-elevational view of the system of Fig. 2 with the preconditioned air hose in a deployed position;

Fig. 5 is a top view of the system of Fig. 2;

Fig. 6 is a front view of the system of Fig. 2 in addition to a frame and grippers;

Fig. 7 is a front view of system of Fig. 2 in addition to a frame and retraction rollers; and

Fig. 8 is a rear view of the system of Fig. 2.

### DETAILED DESCRIPTION OF THE INVENTION

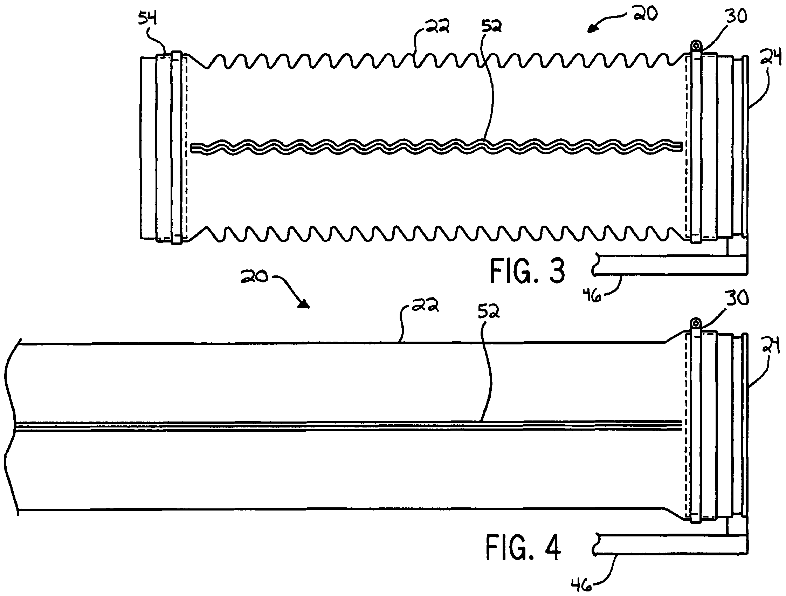

Referring now to Figs. 2-7 and specifically to Figs. 2 and 3, a system 20 for supporting a preconditioned air hose 22 includes a base support 24 that fixedly connects to an end of the hose 22 and a stationary bearing assembly 26 and frame assemblies 28 that engage the hose 22. The hose 22 moves between a storage position, as shown in Fig. 3, in which the hose 22 is axially compressed along the stationary bearing assembly 26, and a deployed position, as shown in Fig. 4, in which the hose 22 delivers preconditioned air from an air source (not shown) to an aircraft (not shown). In the deployed position, the hose 22 is supported by the frame assemblies 28.

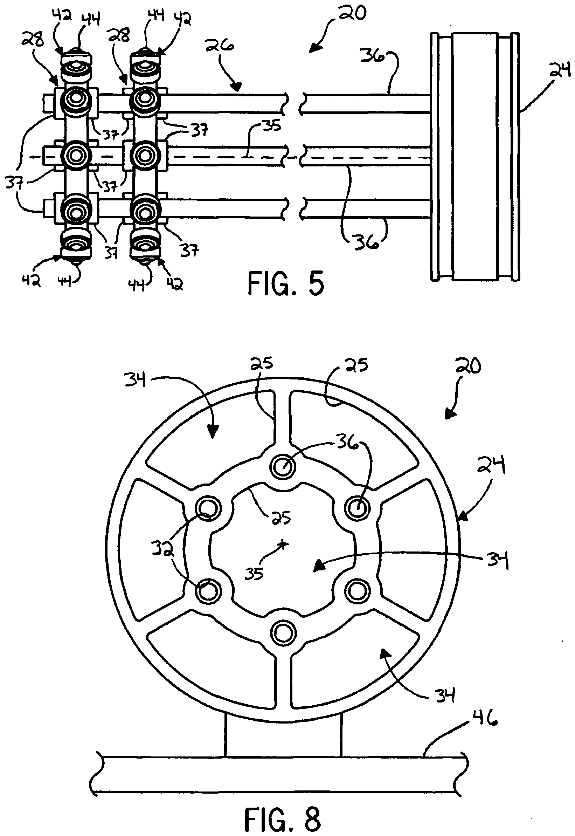

Referring to Figs. 2-5 and 8, the base support 24 is a generally circular member that fixedly connects to an end of the hose 22 by a hose clamp 30 or other similar component. The end of the base support 24 opposite the hose 22 connects to the air source or a conduit in fluid communication with the air source. Referring to Fig. 8, the base support 24 includes a plurality of support holes, two of which are indicated by reference numeral 32, to connect the stationary bearing assembly 26. The support holes 32 are advantageously spaced about the circumference of a base circle at generally equal angles from one another. For example, in the configuration shown in Fig. 8, six support holes 32 are spaced about 60 degrees from one another. The base circle has a diameter of about 8.75 inches to properly accommodate the hose 22. However, the diameter of the base circle may be varied without departing from the scope of the present invention. The base support 24 advantageously has thin walls 25 as viewed in Fig. 8. The walls 25 define a plurality of passages 34 that permit air to pass from one side of the base support 24 to the other.

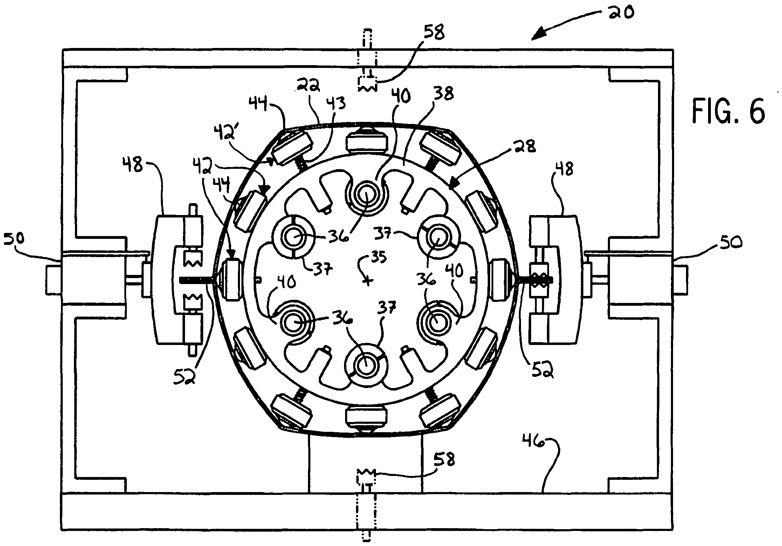

Referring to Figs. 2 and 5, the stationary bearing assembly 26 defines a longitudinal axis 35 in the direction in which the hose 22 generally moves. The stationary bearing assembly 26 advantageously includes a plurality of longitudinal members 36 that engage the hose 22. Each longitudinal member 36 connects to the base support 24 by a single support hole 32. As such, it can be appreciated from Figs. 6 and 8 that the longitudinal members 36 define a generally hexagonal-shaped cross-sectional area with generally equal side lengths. That is, the longitudinal members 36 are spaced about the longitudinal axis 35 at generally equal angels from one another. The longitudinal members 36 provide low resistance to airflow through the system 20 resulting in high airflow efficiency. In addition, the longitudinal members 36 are light-weight compared to similar components in prior-art designs.

Referring to Figs. 2 and 5-7, a first of the frame assemblies 28 connects to the stationary bearing assembly 26 near an end opposite the base support 24. A second of the frame assemblies 28 connects to and is positioned along the stationary bearing assembly 26 between the first frame assembly 28 and the base support 24. The second frame assembly 28 is advantageously closer to the first frame assembly 28 than the base support 24. Referring to Figs. 2 and 5, the first frame assembly 28 is fixed relative to the longitudinal members 36 by collars 37 connected to three of the longitudinal members 36. The second frame assembly 28 is fixed relative to the longitudinal members 36 by collars 37 connected to the other three of the longitudinal members 36.

The frame assemblies 28 are generally identical, and therefore only the first frame assembly 28 will be described in detail. Referring to Fig. 6, the first frame assembly 28 includes a generally annular-shaped member 38 having a plurality of mounting sections 40 that each engage a single longitudinal member 36. The frame assembly 28 also includes a plurality of supports, two of which are indicated by the reference numeral 42, to engage the hose 22. The supports 42 extend radially outwardly from the annular-shaped member 38. The supports 42 may be a friction reducing bearing, which should be understood as a wear material with a low coefficient of friction, a support that includes a roller element, or, as shown in the figures, a support that includes a ball element 44. The supports 42 define a cross-sectional area larger than the hexagonal area defined by the longitudinal members 36 and thereby limit the amount of friction between components of the system 20 and the hose 22. Limiting the amount of friction reduces the amount of wear experienced by the hose 22.

Referring specifically to Fig. 6, according to the invention, at least one, advantageously more than one of the supports 42' are biased radially outwardly from the annular-shaped member 38, for example, by springs 43. Spring-biased supports 42' advantageously compensate for variations in hose diameter due to manufacturing processes. Spring-biased supports 42' also hold the hose 22 in a taut configuration which in turn holds the hose 22 in a proper orientation as it passes over the frame assembly 28. This aspect of the invention will be described in further detail below. The supports 42' to the sides of the supports 42 at the 12 o'clock and 6 o'clock positions are advantageously spring-biased supports 42' because of deflection due to the cantilevered configuration of the stationary bearing assembly 26.

Referring to Figs. 2-4, the base support 24 connects to a frame 46 that connects to a lower surface of a jetway (not shown) or similar structure to support the system 20. The frame 46 may include joints or other components that permit the system 20 to pivot about vertical and horizontal axes relative to the lower surface of the jetway. Referring to Fig. 6, the frame 46 includes grippers 48 that move between open and closed positions to engage a portion of the hose 22. Actuators 50 move the grippers 48 generally in the direction of the longitudinal axis 35. The actuators 50 may be pneumatic actuators, hydraulic actuators, power screws, solenoid actuators, or any other type of linear actuator known in the art. Similarly, it is contemplated that the grippers 48 may take many forms.

Motion of the actuators 50 and the grippers 48 compress the hose 22 along the stationary bearing assembly 26. The grippers 48 move in a cyclic manner and engage different portions of the hose 22 in different cycles. Specifically, the grippers 48 first move to the closed position to engage the hose 22. The actuators 50 then move the grippers 48, for example, 1 ' toward the base support 24. The grippers 48 then open to release the hose 22 and the actuators 50 move the grippers 48 to the original position. The cycle is then repeated. Referring to Fig. 3, the process advantageously compresses the hose 22 having a length of 70 feet along the stationary bearing assembly 26 having a length of 2.44m (8 feet). The hose 22 advantageously includes seams 52 that are engaged by the grippers 48 during the retraction process. As such, the hose 22 is the hose described in U.S. Patent Application Serial No. 11/700,977.

The hose 22 used with the system 20 of the present invention is advantageously deployed manually by an operator. The force required to deploy the hose 22 is low due to the reduced friction provided by the frame assemblies 28. Alternatively, the hose 22 could be automatically deployed, as will be described further below. As briefly described above, the spring-biased supports 42' hold the hose 22 in a taut configuration which in turn holds the hose 22 in a proper orientation as it passes over the frame assembly 28. Specifically, the hose 22 is held such that the seams 52 are near the grippers 48, for example, as shown in Fig. 6, at the sides of the frame assembly 28.

The hose 22 has a diameter of 35.6 cm (14 inches), which is the same as the standard size for a coupling or tube of the preconditioned air source. However, the diameter of the hose may be varied without departing from the scope of the present invention. In addition, referring to Fig. 3, the end of the hose 22 opposite the base support 24 includes a Velcro^{®} section 54 that connects to an aircraft hatch door coupling (not shown).

The system 20 includes a switch or emergency stop (not shown) that may be pressed to stop the retraction process. This may be useful if the hose 22 becomes caught on an object or an obstruction during the retraction process. In addition, the system 20 may include a current sensor (not shown) to stop the grippers 48 and actuator 50 when the hose 22 reaches the storage position.

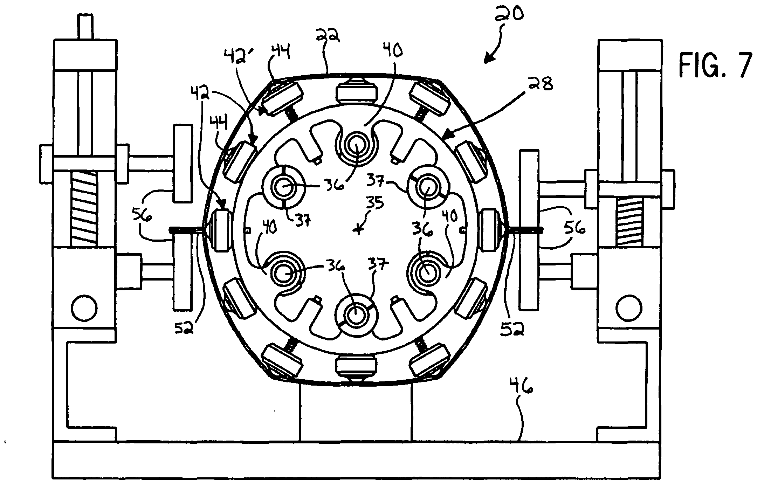

Furthermore, several design modifications are contemplated for the present invention. Referring to Fig. 7, the frame 46 may include retraction rollers 56 that engage the hose 22 instead of grippers. The retraction rollers 56 may be resilient or include serrated surfaces to ensure proper engagement with the hose 22. One of the retraction rollers 56 in each set may be a driven roller and the other may be an idler, and the retraction rollers 56 may both retract and deploy the hose 22. Alternatively, the retraction rollers 56 may be actuated to separate and disengage the hose 22 to permit manual deployment. Further still, the driven roller may include an overload clutch to limit the torque output of the retraction rollers 56.

The system 20 may be provided with only a single frame assembly 28 depending on the characteristics of the hose 22. In addition, instead of connecting to a jetway, the frame 46 may include casters (not shown) that permit the entire system 20 to be moved on the ground. Further still, sensors may be provided that monitor the position of the hose 22 during a retraction process. The sensors may be in communication with a controller that varies the displacement of the actuators 50 and the grippers 48 during the retraction process.

Further still, the frame 46 may include brakes 58 that engage the hose 22 after the retraction process. In addition, the brakes 58 may engage the hose 22 when the grippers 48 release the hose 22 during the retraction process. This may prevent the hose 22 from decompressing when released by the grippers 48. However, the hose 22 may not have a tendency to decompress depending on the specific hose used with the system 20. Referring to Fig. 6, the brakes 58 may be positioned, for example, above and below the supports 42 at the 12 o' clock and 6 o' clock positions, respectively. In addition to the design modifications described above, other modifications will be apparent to those skilled in the art.

It is also contemplated that the present invention may be provided as an unassembled kit of components for retrofitting existing systems for supporting preconditioned air hoses.

The above-described assemblies and components provide a lightweight system for moving a preconditioned air hose. The above-described system is designed to move the hose without reducing the product life of the hose and permit preconditioned air to be delivered efficiently.

## Claims

1. A system (20) for supporting a hose (22) configured to deliver preconditioned air from a source to an aircraft, comprising:
a base support (24);
a stationary bearing assembly (26) connected to the base support (24) proximate a first end of the stationary bearing assembly (26) and configured to engage the hose (22) to support the hose (22); and
a frame assembly (28) connected to the stationary bearing assembly (26) proximate a second end of the stationary bearing assembly (26), wherein the frame assembly has a plurality of supports (42, 42') configured to engage an inner surface of the hose (22), **characterized in that** the plurality of supports (42, 42') includes at least one spring-biased support (42') to hold the hose (22) in a taut configuration and in a proper orientation as the hose (22) passes over the frame assembly (28).

2. The system of claim 1 wherein the frame assembly (28) includes a generally annular-shaped member (38) connected to the plurality of supports (42, 42'), and each of the plurality of supports (42, 42') extends radially outwardly from the annular-shaped member (38).

3. The system of claim 1 wherein at least one support (42, 42') is a friction reducing bearing.

4. The system of claim 3 wherein the at least one support (42, 42') includes a ball element (44) configured to engage the hose (22).

5. The system of claim 1 wherein the base support (24) includes a plurality of passages (34) to permit preconditioned air to pass from a first side of the base support (24) to a second side of the base support (24).

6. The system of claim 1 further comprising a frame (46) connected to the base support (24), and the frame (46) being configured to connect to a jetway.

7. The system of claim 1 further comprising a second frame assembly (28) having a generally annular-shaped member (38) and a support (42, 42') configured to engage an inner surface of the hose (22), and the second frame assembly (28) being connected to the stationary bearing assembly (26) between the first frame assembly (28) and the base support (24).

8. The system of claim 1 wherein the stationary bearing assembly (26) is defined by a plurality of longitudinal members (36).

9. The system of claim 1 further comprising a frame (46) connected to the base support (24), and the frame having grippers (48) configured to engage a seam (52) of the hose (22).

## Patentansprüche

1. System (20) zur Abstützung eines Schlauchs (22), das zur Zuführung von klimatisierter Luft von einer Quelle zu einem Flugzeug konfiguriert ist, umfassend:
einen Basisträger (24);
eine stationäre Lageranordnung (26), die mit dem Basisträger (24) nahe einem ersten Ende der stationären Lageranordnung (26) verbunden und dazu konfiguriert ist, den Schlauch (22) in Eingriff zu nehmen, um den Schlauch (22) zu stützen; und
eine Rahmenanordnung (28), die mit der stationären Lageranordnung (26) nahe einem zweiten Ende der stationären Lageranordnung (26) verbunden ist, wobei
die Rahmenanordnung mehrere Träger (42, 42') aufweist, die dazu konfiguriert sind, eine Innenfläche des Schlauchs (22) in Eingriff zu nehmen, **dadurch gekennzeichnet, dass** die mehreren Träger (42, 42') mindestens einen federbelasteten Träger (42') enthalten, um den Schlauch (22) in einer gespannten Konfiguration und in einer ordnungsgemäßen Ausrichtung zu halten, wenn sich der Schlauch (22) über die Rahmenanordnung (28) erstreckt.

2. System nach Anspruch 1, wobei die Rahmenanordnung (28) ein allgemein ringförmiges Glied (38) enthält, das mit den mehreren Trägern (42, 42') verbunden ist, und wobei sich jeder der mehreren Träger (42, 42') von dem ringförmigen Glied (38) radial nach außen erstreckt.

3. System nach Anspruch 1, wobei mindestens ein Träger (42, 42') ein reibungsminderndes Lager ist.

4. System nach Anspruch 3, wobei der mindestens eine Träger (42, 42') ein Kugelelement (44) enthält, das zum Eingriff mit dem Schlauch (22) konfiguriert ist.

5. System nach Anspruch 1, wobei der Basisträger (24) mehrere Durchgänge (34) enthält, um zu gestatten, dass klimatisierte Luft von einer ersten Seite des Basisträgers (24) zu einer zweiten Seite des Basisträgers (24) strömt.

6. System nach Anspruch 1, das weiterhin einen Rahmen (46) umfasst, der mit dem Basisträger (24) verbunden ist, wobei der Rahmen (46) dazu konfiguriert ist, mit einer Fluggastbrücke verbunden zu werden.

7. System nach Anspruch 1, das weiterhin eine zweite Rahmenanordnung (28) umfasst, die ein allgemein ringförmiges Glied (38) und einen Träger (42, 42') aufweist, der dazu konfiguriert ist, eine Innenfläche des Schlauchs (22) in Eingriff zu nehmen, wobei die zweite Rahmenanordnung (28) zwischen der ersten Rahmenanordnung (28) und dem Basisträger (24) mit der stationären Trägeranordnung (26) verbunden ist.

8. System nach Anspruch 1, wobei die stationäre Lageranordnung (26) durch mehrere Längsglieder (36) definiert wird.

9. System nach Anspruch 1, das weiterhin einen Rahmen (46) umfasst, der mit dem Basisträger (24) verbunden ist, wobei der Rahmen Greifer (48) aufweist, die dazu konfiguriert sind, eine Naht (52) des Schlauchs (22) in Eingriff zu nehmen.

## Revendications

1. Système (20) pour supporter un tuyau (22) configuré en vue de distribuer de l'air préconditionné depuis une source jusqu'à un aéronef, comprenant :
un support de base (24) ;
un ensemble de palier stationnaire (26) connecté au support de base (24) à proximité d'une première extrémité de l'ensemble de palier stationnaire (26) et configuré en vue de s'engager avec le tuyau (22) pour supporter ce dernier ; et
un ensemble de cadre (28) connecté à l'ensemble de palier stationnaire (26) à proximité d'une deuxième extrémité de l'ensemble de palier stationnaire (26),
l'ensemble de cadre ayant une pluralité de supports (42, 42') configurés de manière à s'engager avec une surface interne du tuyau (22), **caractérisé en ce que** la pluralité de supports (42, 42') comporte au moins un support (42') sollicité par ressort pour retenir le tuyau (22) dans une configuration tendue et dans une orientation correcte pendant que le tuyau (22) passe par-dessus l'ensemble de cadre (28).

2. Système selon la revendication 1, dans lequel l'ensemble de cadre (28) comporte un organe de forme généralement annulaire (38) connecté à la pluralité de supports (42, 42'), chacun de la pluralité de supports (42, 42') s'étendant radialement vers l'extérieur depuis l'organe (38) de forme annulaire.

3. Système selon la revendication 1, dans lequel au moins un support (42, 42') est un palier à réduction de friction.

4. Système selon la revendication 3, dans lequel l'au moins un support (42, 42') comporte un élément de bille (44) configuré de manière à s'engager avec le tuyau (22).

5. Système selon la revendication 1, dans lequel le support de base (24) comporte une pluralité de passages (34) pour permettre à de l'air conditionné de passer depuis un premier côté du support de base (24) jusqu'à un deuxième côté du support de base (24).

6. Système selon la revendication 1, comprenant en outre un cadre (46) connecté au support de base (24), et le cadre (46) étant configuré de manière à se connecter à une passerelle.

7. Système selon la revendication 1, comprenant en outre un deuxième ensemble de cadre (28) ayant un organe de forme généralement annulaire (38) et un support (42, 42') configuré de manière à s'engager avec une surface interne du tuyau (22), et le deuxième ensemble de cadre (28) étant connecté à l'ensemble de palier stationnaire (26) entre le premier ensemble de cadre (28) et le support de base (24).

8. Système selon la revendication 1, dans lequel l'ensemble de palier stationnaire (26) est défini par une pluralité d'organes longitudinaux (36).

9. Système selon la revendication 1, comprenant en outre un cadre (46) connecté au support de base (24), le cadre ayant des dispositifs de préhension (48) configurés pour s'engager avec un joint (52) du tuyau (22).
